# EUROPEAN PATENT SPECIFICATION

(11) **EP 3 322 615 B1**
(45) Date of publication and mention of the grant of the patent: **18.12.2019**
(21) Application number: 15784761.7
(22) Date of filing: 16.07.2015
(51) Int. Cl.: B60R 7/04, B60R 7/02, B65D 90/00, B62D 33/06, B60R 5/00

(54) **FOLDABLE STORAGE ARRANGEMENT**
ZUSAMMENLEGBARE LAGERANORDNUNG
ARRANGEMENT DE STOCKAGE PLIABLE

(43) Date of publication of application: 23.05.2018
(73) Proprietor: Volvo Truck Corporation, 405 08 Göteborg (SE)
(72) Inventor: PICARDEL-VAILLIER, Thibault, F-01310 Polliat (FR); ADAM, Bruno, F-69008 Lyon (FR)
(74) Representative: Goreaud, Alexandra
(86) International application number: PCT/IB2015/001774
(87) International publication number: WO 2017/009682

(56) References cited:
- EP-A1- 1 894 774
- WO-A1-2011/126426
- DE-A1- 2 701 786
- US-A- 5 667 120
- US-A- 5 893 616
- US-A- 6 053 553

## Description

The present invention is directed to a foldable and modular storage arrangement comprising one or more storage modules. In particular, the modular arrangement of the present invention is adapted to the storage equipment of vehicles comprising a living area. Such vehicle includes camping cars, buses, trucks, long haul trucks. The present invention also encompasses a vehicle equipped with such a modular storage arrangement.

### Background

In vehicle storage space, it is well-known to have devices offering the possibility to subdivide the storage area as shown in DE2701786, US5667120 and US6053553. When referring to foldable storage arrangement one could think of storage arrangements as the reusable plastic shipping container described in US3987924 or to arrangements that can be quickly and easily assembled such as in US5893616, one could also think of storage units installed as shown in EP1894774. Vehicles having a living space usually comprise storage elements as can be seen, bunk and other equipment like fridge, oven and the like. In order to optimize the free space, it is an advantage to provide sufficient modulation possibilities by removing or compacting the non-used equipment. Such a vehicle comprising a living space may be a recreational vehicle, a bus or an industrial vehicle, like for instance a long-haul truck. More particularly, in the case of a heavy truck, a secondary bunk may be provided above the main bunk, behind the driver's seat. However, the secondary bunk is not always used. The corresponding space can therefore be optimized in such a way that storage is provided instead of a bunk. A known solution consists in folding the secondary bunk against the wall of the cabin. For example, WO2011126428 describes a bunk, wherein a storage compartment is provided when the bunk in folded against the wall of the cabin and WO2011126426 describes a shelf configuration intended to constitute a storage space bounded by a shelf portion and by a roof portion and a wall portion with a possible change in shape of the storage space. However, such a solution does not provide intermediate modularity, with tunable storage space, and where a part of the bunk is still available. US3987924 A discloses a foldable storage arrangement according to the preamble of claim 1.

In addition, there is not possibility to add other kind of equipment, like an oven or any other feature. It may be an advantage for a truck owner to set a specific arrangement wherein the secondary bunk is replaced by a combination of storage modules and other equipment, which can be variably disposed on the rear headershelf in such a way that less or more storage space may be provided depending on the needs.

### Summary of the invention

It is the aim of the present invention to provide an improved modularity of the living space of a vehicle. In particular, the present invention provides a foldable storage arrangement, comprising at least one storage module. A storage module comprises two vertical side walls, on which is maintained a front wall by the mean of a fastening means. The front wall may be rigid or supple. The two side walls and the front wall describe all together a storage volume. Each side wall may further be provided with at least one fixation element to maintain the storage module onto a support, placed within the vehicle.

The present foldable storage arrangement may comprise more than one storage module, which can be joined or separated. In the case of joined storage modules, a side wall may be provided with fastening means, able to maintain the front wall of two adjacent storage modules.

Any usual fastening mean may be used to maintain the front wall to the side walls. It can be for example a zip, a scratch, a set of snaps, or straps, or any equivalent fastening means. Also the edges of the front wall may be inserted within rails fixed on the side walls in such a way that the front wall can slide from a closed position to an open position. Such a fastening mean is localized on the edge of the side walls. Alternatively, the front wall of the first storage module may be directly fixed on the edge of a side wall, and the front wall of a second storage module may be fixed over the front wall of the first storage module on the edge of the side wall. Such an overlap of the two front walls may be obtained if the external surface of one of the front walls is provided with a fastening mean adapted to fix the internal surface of the second front wall. In particular, a scratch band or a line of snaps can be arranged on the external surface of a front wall of a first storage module in order to fix the front wall of a second storage module.

The side wall may further be provided with additional fixation means usable to stow, or link additional elements. For example a net may be fixed on the storage modules and stretched between the storage modules and the top of the cabin.

The side walls may have various shapes, including square or rectangular shapes, or a convex semi-circular shape, wherein a convex semi-circular front edge joins a straight back edge and a straight bottom edge. Any intermediate shape may be used, wherein one or more straight edges are replaced by a slightly round edge. The side walls may also comprise a convex portion and a concave portion. For example, the front edge can be convex whilst the top edge has a concave shape. In such a way, luggage or a folded mattress may be place on the top of the storage modules.

The storage modules are fixed on a support within the vehicle. The support preferably belongs to the structure of the vehicle. Such a support includes a shelf, a beam, or any other structural element. The support is preferably horizontal in such a way that the storage module can be put on it. Thus, the support may be the parallel beams of an upper bunk, behind the seats, or the header shelf which is above the windscreen, or even lateral supports above the doors. Any specific organization may be provided. For example, the storage modules may be designed to be suspended to the support instead of being put on it. Also, the support may be a vertical beam on which are fixed the sides walls of the storage modules. Under such a configuration, the side walls are horizontal instead of being vertical, and the storage modules are disposed one above the other instead of being one beside the other. The storage modules are maintained on the support by at least one fixation element. Any usual fixation element may be used. The fixation elements are preferably placed on the side walls of the storage modules, or integral with the side walls. Examples of usable fixation elements are a strap, a snap, a clip, a hook, a pin or a tab.

In addition to the front wall and the two side walls, a storage module may comprise a back wall, a bottom wall, and a top wall, connectable to the side walls. All front wall, top wall, back wall and bottom wall may be made in a supple material in order to be folded when the side walls are compacted. Any kind of supple material may be used, such as fabric, supple polymer, or supple plastic. Alternatively, rigid or semi-rigid front wall, back wall, top wall, bottom wall may be used.

The storage arrangement of the present invention may comprise several storage modules, which are either joined or separated, and which can be independently folded or deployed. Folded means that the storage volume, determined by two side walls and the corresponding front wall, is shrink or eliminated by placing the two side walls close to each other.

The present invention further encompasses a kit comprising a set of side walls and front walls, corresponding to one or more storage modules. Such a kit may further optionally comprise a top wall, a back wall, a bottom wall, and fixation elements if they are not already included within the side walls. A kit may comprise for example a set of spare parts corresponding to 3 storage modules. In particular, a kit can comprise at least 4 side walls and 3 front walls. It is contemplated that each storage module may be sold independently.

The present invention also encompasses a vehicle comprising the storage arrangement described herein. In particular, the vehicle may be a long haul truck, having an horizontal support on which may be placed one or more storage modules of the foldable storage arrangement. Such an horizontal support may be for instance transversal beams above the main bunk, behind the driver's seat. Such beams may be provided with grooves, or holes, in which the fixation elements of the storage modules, like pins or rigid tabs, can be inserted. Alternatively, the support of the vehicle may be a shelf placed anywhere in the vehicle, like above the windscreen, above the doors, or behind the driver's seat. The vehicle can merely be provided with holes on one or more of its walls, where hooks or any equivalent fixation elements of the storage modules may be inserted..

### Drawings

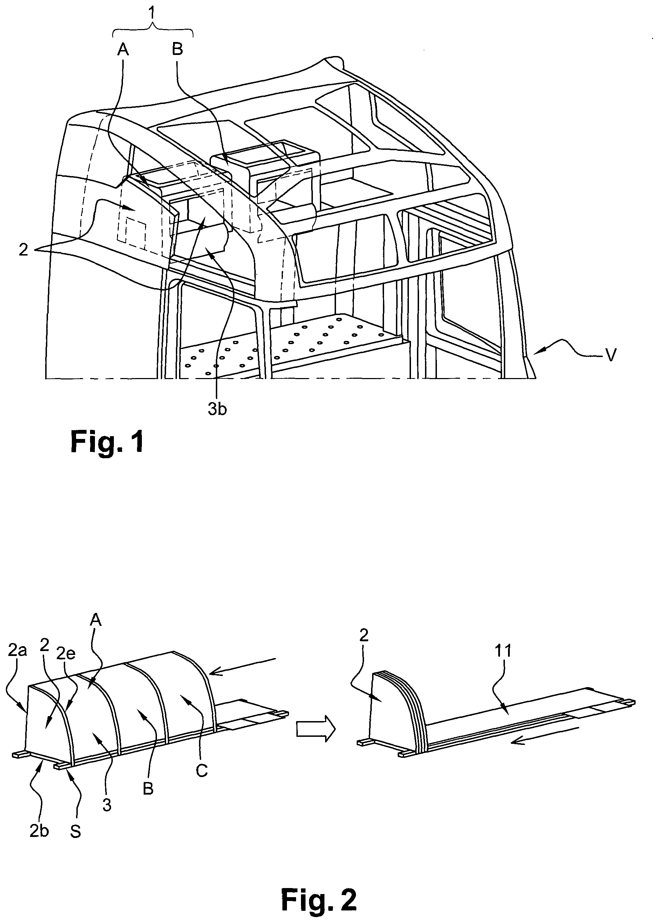

Figure 1: Example of a foldable storage arrangement within a vehicle **v**
Figure 2: Example of a foldable storage arrangement 1, in a deployed position, and in a compacted position

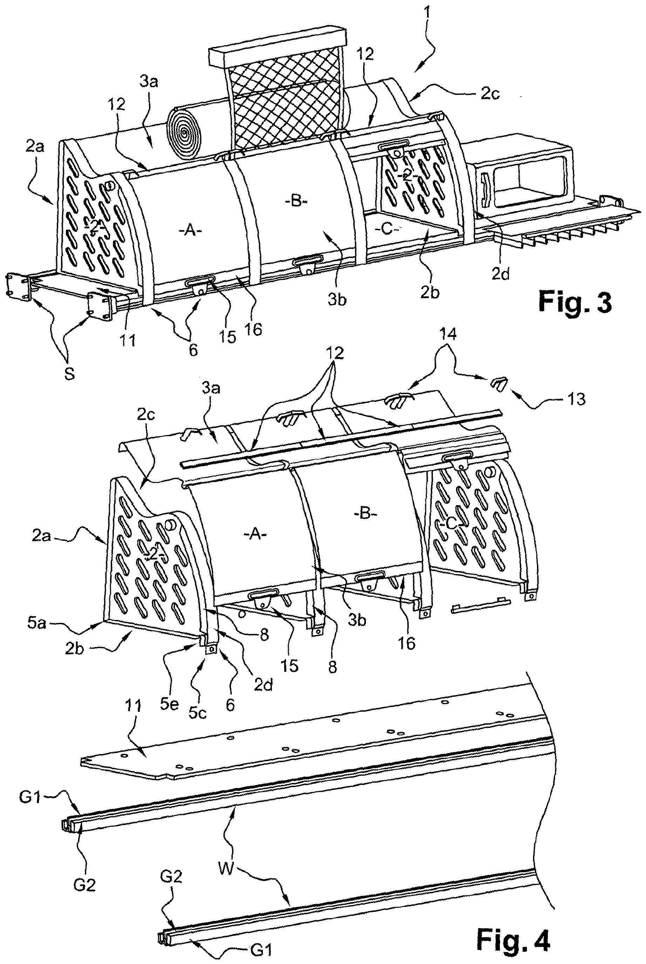

Figure 3: Example of a foldable storage arrangement 1
Figure 4: Details of the foldable storage arrangement of the figure 3

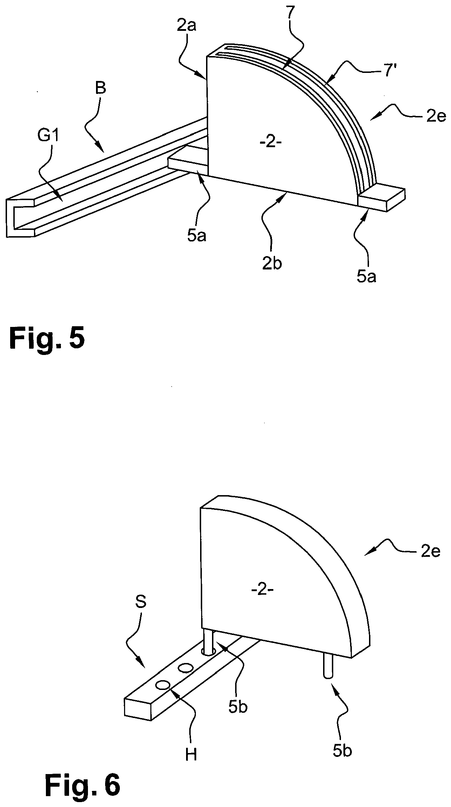

Figures 5 and 6: examples of a fixation of a side wall within a support

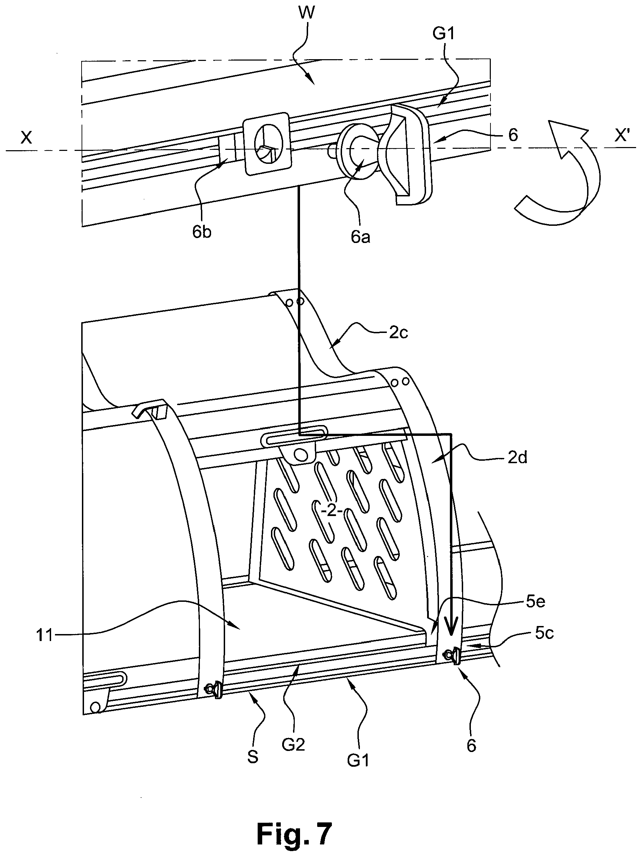

Figure 7: example of a locking mean of a side wall on a support

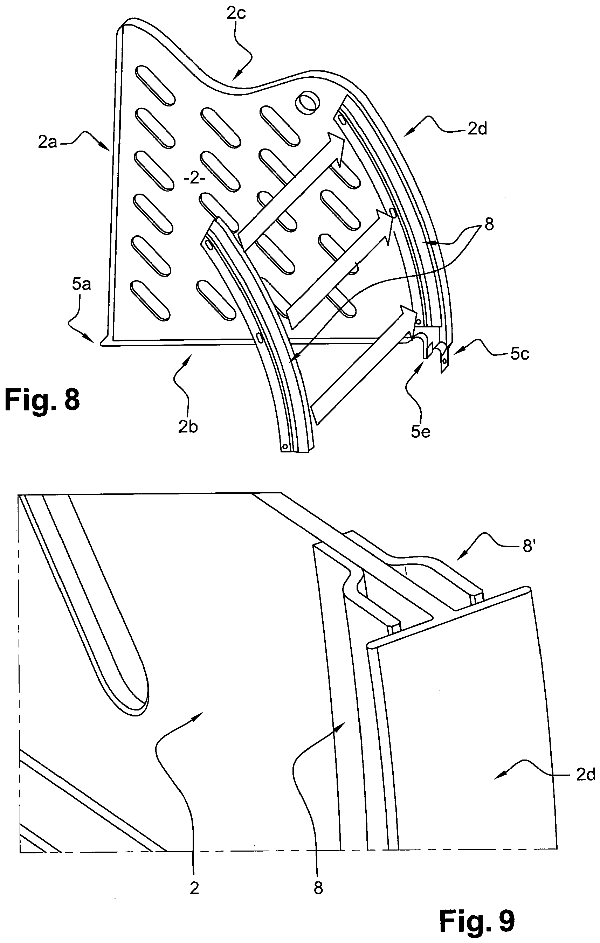

Figure 8: Example of a fastening mean on a side wall **2.**

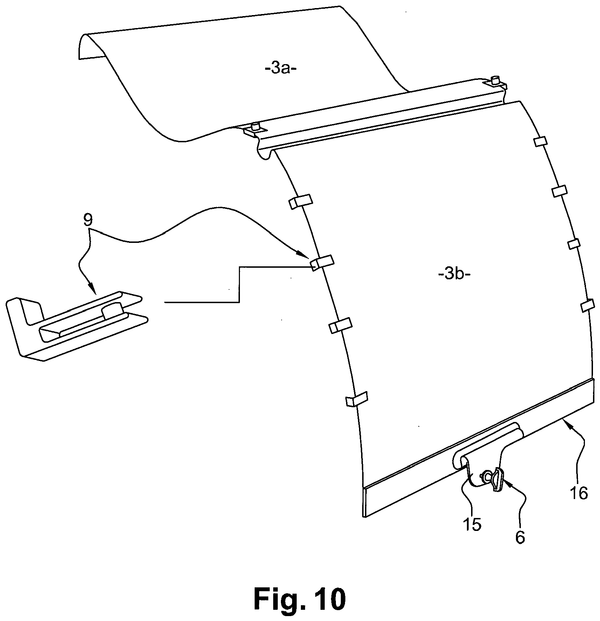

Figures 9 and 10: Details of a fastening mean of a front wall on side walls **2.**

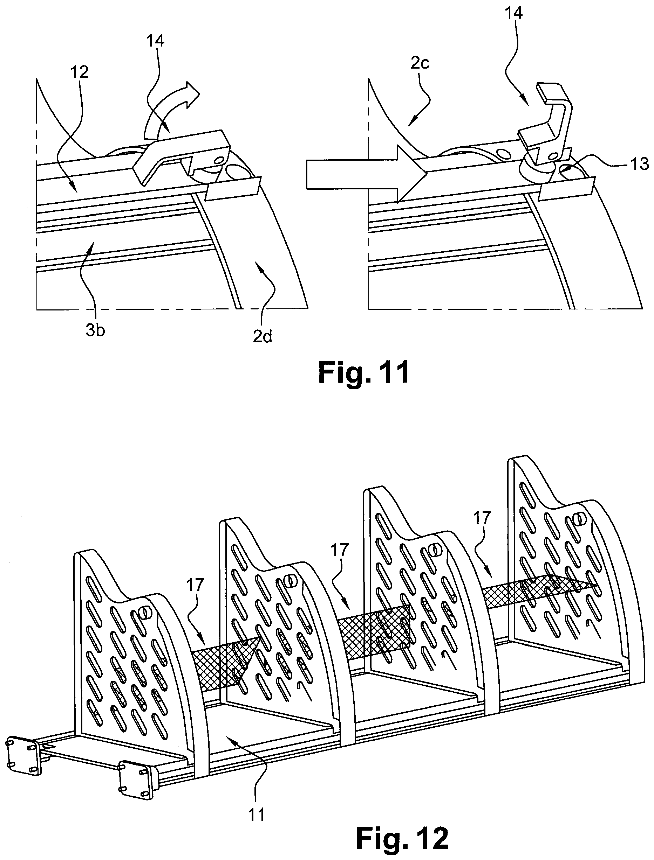

Figure 11: details of a locking mean of a latch **12** on a side wall **2.**
Figure 12: Example of additional accessories fastened on the side walls **2.**

### Detailed description:

The foldable storage arrangement **1** comprises at least a first storage module A, designed to be placed within a vehicle **v**, and comprising **2** vertical side walls **2.** The side walls **2** of a storage module **A** are preferably rigid, in such a way that they determine a storage volume defined by the dimensions of the side walls **2** and the space between said side walls **2.** The volume of a storage module **A** may be comprised between around 40 litters and around 120 litters. It is preferably comprised between around 60 litters and around 100 litters, and more preferably between around 80 litters and around 90 litters. The storage arrangement **1** may comprise between 1 and 6 storage modules, depending on the desired global storage volume. The global storage volume may be comprised between about 100 litters and about 500 litters, and ideally between 200 litters and about 400 litters. The volume of each storage module may be determined according to the number of storage modules planned to be disposed in the vehicle **v**, and to the volume of each storage module. A storage arrangement **1** having a global storage volume of about 240 litters may comprise 3 storage modules **A**, **B**, and **C**, having each a volume of around 80 litters. Within a same storage arrangement **1**, the volume of each storage module may vary from one to the other, in such a way that the global storage volume can be tuned over a large range.

The rigid side walls **2** may be made in light polymer, or plastic panels, or cardboard, or any other equivalent rigid or semi-rigid material. The side walls **2** may be either plain or open worked, or provided with holes or apertures. Such apertures provide the advantage of allowing air circulation and lighten the storage arrangement **1.** The apertures of the side walls **2** may further be used to insert additional equipment, like internal separations **17**, which optimize the internal space of the storage module.

Alternatively, the side walls **2** may be supple. In that case, the storage volume is not maintained and the storage module looks like a supple bag, which substantially takes the volume of its content.

One or more of the side walls **2** may be each provided with at least one fixation element **5.** The fixation element **5** encompasses any fastening means able to maintain a storage module on a support **S** within the vehicle **v.** The fixation element **5** preferably allows an easy removal of the storage module. It may be for example a strap, a snap, a hook or a clip. It can also be a rigid axis **5b** that may be inserted in a hole **H** of the support **S.** Alternatively, the fixation element **5** may be a rigid pin or tab **5a** which can slide within a groove **G1** provided in the support **S**, in order to allow the side walls **2** to slide from a first position to a second position along the support **S.** Also, the fixation means can be a hook **5c** clamping the support **S.** Depending on the support **S**, one or more fixation element **5** may be provided on each side wall **2.** For example, if the support **S** is a shelf, one hook placed at the bottom front corner of the side wall **2** may be sufficient to clamp the shelf and maintain the side wall **2** at a vertical position. If the support consists in 2 parallel beams **W**, one fixation element **5** may be provided at each corner of the bottom edge **2b** of the side walls **2**, in such a way that the side wall is fixed on the two parallel beams **W.** If more than 1 fixation element **5** is present on a side wall **2**, they are not necessary identical. An axis **5b** may be for example provided at one of the corner of the side wall **2** and a hook **5c** at another corner.

In a particular arrangement, a side wall **2** of the storage module **A** comprises a rigid tab **5a** at its back corner, in the continuity of its bottom edge **2d**, and a hook or a front rigid tab **5c** at its front corner, in the continuity of the front edge **2d**, **2e.** Such a combination of fixation elements **5a** and **5c** allows inserting the tab **5a** of the back corner into a lateral groove **G1** of a first beam **W** of the support **S**, whilst inserting the front tab **5c** into an upper groove **G2** of the second beam **W**, parallel to the first one. Thus, only one simple move is necessary to place or remove the side wall **2** on the support **S.** Furthermore, the side wall **2** can easily slide along the beams W.

An alternative arrangement may comprise the same back tab **5a** as above, a front tab **5c** in the continuity of the front edge **2d**, **2e** of the side wall **2**, wherein the front tab **5c** arrives in contact of the external side of the beam **W** instead of being inserted within its groove **G2**, and wherein the front tab **5c** is further provided with a locking system **6.** Such a locking system **6** can for example comprise a pin **6a** which can be inserted through the tab **5c** and within a lateral groove **G1** of the beam **W.** Turning the pin **6a** on its longitudinal axis XX', at a given angle, allows to lock or unlock the side wall **2** on the beam **W.** A usual angle of locking may be around 90°C. However, any other angle may be chosen. Turning back the pin **6a** to its original position allows to unlock the side wall **2** and either remove it or making it sliding along the support **S.** A receiver **6b** may optionally be inserted in the groove **G1** of the beam **W** to receive the pin **6a.**

In addition, a shorter tab **5e** may be provided on the bottom edge **2b** of the side wall **2**, behind the first tab **5c**, and inserted in a upper groove **G2** of the support beam **W**, in such a way to better secure the storage module **A** on the support **S.**

The fixation element **5** is preferably located at the bottom of the side wall **2** is such a way that the storage modules **A**, **B**, **C** are placed on the support **S.** It is however possible that the storage modules are suspended to the support **S** by the fixation element **5.** In that case, the fixation element **5** is provided on the top of the side walls **2.**

An additional fixation element **5** may optionally be provided on the back edge **2a** of the side walls **2** in order to fasten it on a wall of the vehicle **v**, like for example the back wall of the cabin. This additional fixation element **5** at the back edge **2a** allows maintaining the side walls **2** at a vertical position.

In another configuration, only one fixation element **5** may be located on the back edge **2a** of the side wall **2**, and inserted in a hole provided on a wall of the vehicle **v.** This allows to suspend directly the storage module **A, B, C** within the cabin when no support **S** is available.

The support **S** is preferably a structural element of the secondary bunk. It can comprise for example two horizontal parallel beams **W** extending from one side to the other side of the cabin of the vehicle **v**, behind the driver's seat. Each parallel beam **W** may be provided with at least a first longitudinal groove**G1**, placed along one of its vertical surfaces. In addition, or alternatively, one or more of the parallel beams W may be provided with a second groove **G2**, placed along on upper surface. A groove **G1**, **G2**, may be provided along one portion of the beams **W** or along the entire length of the beams **W.** Alternatively, the beams **W** may be provided with a series of holes H into which a fixation element, like an axis **5b**, may be inserted. Preferably, the number of holes is enough to allow several distances between 2 adjacent side walls **2.** In particular, a series of holes **H** may comprise 2 or more holes close to each other to allow a compact arrangement, and 2 or more holes distant from each other to allow the deployed arrangement. A distance between two holes H should correspond to the width of the front wall **3** of a storage module **A, B, C** to allow the deployed position. A short distance between two adjacent holes **H** may correspond to the width of one or two side wall **2**, to secure a compact arrangement.

In a preferred configuration, each side wall **2** is provided with 1 fixation element **5** at each corner of the bottom edge **2b**, in such a way to comprise 2 fixation elements. However, any other configuration may be conceived, like for example a configuration wherein a first fixation element **5** is provided at the bottom front corner of a side wall **2**, and a second fixation element is provided at the top back corner of the same side wall **2.**

The side walls **2** may have a square or rectangular shape, or any other geometrical shape having 4 corners and 4 edges. The back edge **2a** is positioned against a wall of the vehicle **v**, like the back wall of the cabin of a long haul truck. The bottom edge **2b** is put on a support **S.** The top edge **2c** and the front edge **2d** may be used to fix a top wall **3a** and a front wall **3b** of the storage module **A, B, C.** In such a way, the storage volume defined by the sides walls **2** and the top wall **3a** and the front wall **3b**, may be a cube or a parallelepiped.

Alternatively, the front edge **2d** may be smaller than the back edge **2a** in such a way that the top wall **3a** of a storage module A is inclined.

A variant may comprise semi-circular side walls **2**, comprising a straight back edge **2a** positioned against a wall of the vehicle **v**, a straight bottom edge **2b** designed to be fixed on the support **S**, and orthogonal to the back edge **2a**, and a convex semi-circular edge **2e** joining the back edge **2a** and the bottom edge **2b**. A front wall **3** may thus be fastened on the convex semi-circular edge **2e** of two contiguous side walls 2.

In an improved arrangement, the side wall **2** comprises a convex curved front edge **2d**, and a concave curved top edge **2c.**

The front wall **3**, or the front wall **3b** and the top wall **3a** may be fastened on the corresponding edges of the side walls **2** by any fastening mean **7**, including snaps, zip, scratches, pins or equivalent. For example the same pin **6a** as above mentioned, may be used. In that case the top wall **3a**, is provided with holes wherein the pin **6a** can be inserted and locked on the side wall **2**. A fastening mean 7 may alternatively comprise a rail 8. In a preferred arrangement, each side wall **2** of a storage module A is provided with a pair of rails **8,8',** placed on the front edge **2d, 2e** or on each lateral face of the side wall **2,** close to the front edge **2d, 2e.** The edge of the front wall **3, 3b** can slide from a closed position to an open position. At least one sliding element **9** may be placed on each edge of the front wall **3**, **3b.** A sliding element **9** is preferably a rigid tab having a shape complementary to a rail **8** in such a way that it can slide within a rail **8,** while maintaining the front wall **3, 3b,** connected to the side wall **2.** A sliding element **9** comprises a part, which is fixed to the front wall **3, 3b,** and a part which slides within the rail **8.** The part fixed on the front wall **2** may comprise for example a rivet, or any equivalent mean able to maintain the sliding element **9** fixed on the front wall **3**, **3b**. A front wall **3, 3b** may be provided with 1 or 2 or 3 or more pairs of sliding elements **9.** Thus, in a closed position, the front wall **3, 3b** is stretched along the rails **8.** In an opened position, the sliding elements **9** are joined together at an extremity of the rails **8** and the front wall **3, 3b** is folded, if it is made in a supple material. In case the front wall **3, 3b** is made in a rigid material, it may slide up against the top wall **3a**, or against the upper surface of the front wall **3.**

In case a storage module comprises a front wall **3b** fastened on the corresponding front edge **2d** of the side walls **2,** and a top wall **3a,** fastened on the corresponding top edge **2c** of the side walls **2,** the fastening mean **7** may not be the same for the top wall **3a** and for the front wall **3b.** The top wall **3a** can be fastened on the top edge **2c** of the side walls **2** by the means of pins 6a or similar, while the front wall 3b is fastened on the front edges **2d** of the side walls **2** by the means of sliding elements **9** and rails **8.**

Each side wall **2** may be provided with two set of fastening means (**7**, **7'**), either on its semi-circular edge **2e**, or on one or more of the top edge **2c** and the front edge **2d.** In such a way, the front walls **3**, or the front wall **3b** and the top wall **3a** of two adjacent storage modules may be fastened on one single side wall **2.**

Alternatively, the border of the front wall **3,** or the front wall **3b** and top wall **3a** of a first storage module **A,** may be provided with a fastening mean allowing the superimposed fixation of a front wall of a second storage module **B.** The front wall **3,** or one or two of the front wall **3b** and top wall **3a** may therefore be easily opened to place content in, or remove content from the storage modules.

Above and below, a "fastening mean" should be understood in a broad sense, and includes any mean allowing the fixation of the top wall **3a,** and the front wall **3, 3b** on the corresponding side walls **2.**

A "fixation element" denotes any element which allows the fixation of a storage module **A, B, C** on a support **S.** The fixation elements include the features **5**, **5a**, **5b**, **5c**, **5d** herein discussed.

A "fixation mean" denotes an additional element of fixation, provided on one or more storage modules A, B, C, and allowing the fixation of optional equipment.

Above and below, the terms "front", "bottom", "back", "top", etc denote the orientation of the described element when positioned within the vehicle **v** and when facing the user. To this extend, the front edge of a side wall **2** corresponds to the edge facing the user, and a bottom edge corresponds to the edge placed on the support.

The front wall **3**, the front wall **3b** and the top wall **3a** are preferably all supple, in such a way that they can fold when the two side walls **2** are compacted one against the other. Therefore, the front wall **3**, or the front wall **3a**, and the top wall **3b** are preferably made in fabric, or supple polymer, or plastic, or any equivalent supple material. A closable aperture may optionally be provided on any one of the surfaces of the front wall **3, 3b,** or top wall **3a,** in order to access the internal storage space defined by a storage module **A,** without dissociating the front walls **3**, **3b**, or the top wall **3a**, from the side walls **2.**

According to a particular arrangement, 2 contiguous side walls **2** may be maintained by one or more transversal lath **12**, extending from one side wall **2** to a contiguous side wall **2**, in order to rigidify the assembly. The lath **12** may be made in a rigid or semi rigid material, like plastic, polymer, or wood. The lath **12** may be fixed on each side wall **2** by a locking element similar to those above mentioned for the fixation of the storage module on the support **S.** Each lath **12** may be for example provided with a hole at each of its extremity, wherein a pin **6a** can be inserted and turned by a certain angle to lock the lath **12** on the side wall **2.**

Alternatively, a compressible pin **13** may be inserted in the hole of the lath **12**, and in a hole provided in the side wall **2**, and compressed in such a way that the lath **12** is maintained on the side wall **2.** The compressible pin **13** may be compressed by the mean of a handle **14** able to rotate on an axis orthogonal to the longitudinal axis of the compressible pin **13** and comprising a bulge (not shown) in contact with the lath **12**, in such a way that a rotation of the handle **14** toward the lath **12** compresses the compressible pin **13** and locks the lath **12** onto a storage module **A.** A lath **12** may be placed anywhere along the front wall **3**, **3b** or a top wall **3a.** However, a lath **12** is preferably fixed on a side wall **2** at its front top corner, if any, or between its front edge **2d** and its top edge **2c.** The lath **12** can easily be removed thanks to the handle **14** and the compressible pin **13**, to allow the storage arrangement **1** to be compacted.

The front wall **3**, **3b**, may further be provided with a locking mean **15** designed to maintain the corresponding storage module closed. Such a locking mean **15** may be for example a hook which can be inserted in a lateral groove **G1** of a beam **W**, or able to clamp the edge of a shelf if the support **S** is a shelf. The locking mean **15** can also serve as a handle to move the front wall **3**, **3b** from an open position to a closed position. The locking mean **15** may be directly fixed on the front wall **3**, **3b**, or on a transversal blade **16**, placed on the edge of the front wall **3**, **3b.** The blade **16** being fixed on a supple front wall **3**, **3b**, it can easily be folded with the supple front wall when the corresponding storage module is compacted.

In case no blade **16**, and no lath **12** are present, there is no rigid part between two contiguous side walls **2.** Thus, the supple front wall **3**, **3b** and /or top wall **3a** may be marked with predetermined folding lines in such a way that they properly folder when the corresponding storage module is compacted.

A storage module **A** may optionally comprise a bottom wall **10** (not shown). The bottom wall **10** may be made in a foldable supple material. A rigid or semi-rigid panel may be placed on the supple bottom wall **10** in order to sustain the content of a storage module **A.** The bottom wall **10** may alternatively be made in a rigid material in order to better sustain the stored content. In this later case, the rigid bottom wall **10** should be dissociated from the other elements of the storage module **A**, including the side walls **2**, the front wall **3** or **3b**, and optionally the back wall **4** (not shown), before folding it. However, in case the support **S**, on which a storage module **A** is fixed already comprises a plain rigid surface **11**, or blades or equivalent base surface, then the bottom wall **10**, either rigid or supple, may not be necessary. In particular, when the support **S** is a shelf, then, a bottom wall **10** is not mandatory.

If present, the back wall **4** may be rigid or semi-rigid, to maintain at least a part of the storage volume in case the side walls **2** are supple. In that case, the back wall **4** should be easily removable from the other elements of the storage module A, comprising the side walls **2**, the front wall **3, 3b** or the top wall **3a.** Otherwise the back wall **4** may also be supple and foldable, and made in the same or different material than the front wall **3**, **3b**, or top wall **3a.** The back wall **4** is optional since the back wall of the cabin of the vehicle **v** may provide a back wall for a storage module **A**, once fixed on the support **S.**

Back wall 4 and bottom wall 10 may be fastened on the corresponding side wall by the fastening means already described.

The front wall **3**, or the front wall **3b** and the top wall **3a**, are preferably completely removable from at least one of the side walls **2.** If present, the bottom wall **10** and the back wall **4** are also completely removable from the corresponding edges of the side walls **2.** Thus, a storage module **A** may easily be removed and stored in a reduced spaced elsewhere in the vehicle **v.**

Further, the storage modules **A, B, C** may be sold as a kit **K** comprising two rigid or supple side walls **2**, a supple front wall **3**, or a supple front wall **3b** and a supple top wall **3a**, and optionally a supple back wall **4** and a bottom wall **6.** The kit **K** may further comprise additional fixation means if not already contained in the side walls **2.** The kit may further comprise a rigid or semi-rigid panel at the dimension of the bottom wall **10**, to be placed within the storage module **A** once it is positioned on the support **S.** The kit K may be designed for 1, 2, 3, or more storage modules, meaning that the number of side walls **2**, front walls **3**, or front wall 3b and top wall 3a, and optional bottom walls 10 and back walls 4 allow to set up 2, 3 or more storage modules A, B, C.

According to a particular arrangement, a storage module A may comprise 2 side walls 2, each provided with at least one fixation element 5, preferably two fixation elements 5, a back wall 4, a bottom wall 10, and a front wall 3, or a front wall 3b and a top wall 3a. The 2 side walls 2, the bottom wall 10 and the back wall 4, together with the front wall 3, or the front wall 3b and the top wall 3a, describe a closed storage volume. A storage module A, B, C may further be provided with one or more handles **17** (not shown). Thus, the storage module A, B, C may be used as a bag or a luggage outside the vehicle **v,** and may be fixed on the support **S** by the means of the fixation elements **5**, once it is inside the vehicle **v.**

A second storage module **B**, comprising the same elements as those already described for the storage module A, may be placed elsewhere on the support **S.** The second storage module **B** may for example be in contact with the first module **A**, or at the opposite end of the support **S.** In order to limit the global weight of the foldable storage arrangement **1**, the first module **A**, and the second module **B**, advantageously share a common side wall **2,** wherein the front walls **3,** or front walls **3b** and top walls **3a,** of both storage modules A and B are fastened. The same applies for a third storage module **C**, and any additional storage module. Alternatively, the front wall **3** of the second storage module **B** may overlap the front wall **3** of the storage module **A**, being fixed on it. The same applies in case the storage modules comprise a front wall **3b** and a top wall **3a.** The fastening of the front wall **3** of the second storage module **B** onto the front wall **3** of the first storage module **A** may be performed for example, by a scratch band, placed close to the edge of the front wall **3** of the first storage module **A.** Such a scratch band preferably coincides with the edge of the side wall **2.** The same applies in case the storage modules comprise a front wall **3b** and a top wall **3a.**

The foldable storage arrangement **1** may thus comprise separate storage compartments, defined by the storage modules **A**, **B**, **C**, wherein all storage modules **A**, **B**, **C**, may be deployed in a row, or placed as separate blocs. Further, any storage module may be independently folded, by compacting two adjacent side walls **2** together. The storage arrangement **1** thus allows the user to progressively expend the storage volume from a configuration wherein all the storage modules **A**, **B**, **C** are folded, to a configuration wherein all the storage modules **A**, **B**, **C** are deployed. The remaining space on the support **S**, beside the storage arrangement **1**, may be used for other purposes than storage. For example, a short bunk may extend from the storage arrangement **1** to the opposite side wall of the cabin. The length of the bunk may be tuned for example, by the means of blades, which can slide within the beams W of the bunk. Other equipment may also be arranged beside the foldable storage arrangement **1**, like an oven, a TV screen, or anything else, depending on the needs and the remaining space.

## Claims

1. A foldable storage arrangement (1), comprising at least a first storage module (A) wherein said storage module (A) comprises two side walls (2) and one front wall (3, 3b), wherein each side wall (2) is provided with at least one fastening mean (7) to maintain the front wall (3, 3b) on said side walls (2), and that each side wall (2) further comprises at least one fixation element (5) to fix said side wall (2) onto a support (S) and wherein said side walls (2) comprise a straight back edge (2a), a straight bottom edge (2b) orthogonal to the back edge (2a), a top edge (2c), on which is fastened a top wall (3a), and a front edge (2d), on which is fastened a front wall (3b). **characterized in that** the top edge (2c) of the side walls (2) has a concave shape, and wherein the front edge (2d) of the side wall (2) has a convex shape.

2. Foldable storage arrangement (1) according to claim 1, wherein at least one of the two side walls (2), is provided with a second fastening mean (7'), able to maintain the front wall (3, 3b) of a second storage module (B), adjacent to the first storage module (A).

3. Foldable storage arrangement (1) according to claim 1 or 2, wherein said side walls (2) comprise a strait back edge (2a), a straight bottom edge (2b) orthogonal to the back edge (2a) and a semi-circular front edge (2e) joining the back edge (2a) and the bottom edge (2d), and on which is fastened the front wall (3).

4. A foldable storage arrangement (1) according to any one of the preceding claims, wherein said fastening means (7, 7') comprise a rail (8, 8') fixed on one or more of the side walls (2), wherein a front wall (3, 3b) can slide from an open position to a closed position.

5. A foldable storage arrangement (1) according to claim 5, wherein the front wall (3, 3b) of the storage modules (A, B, C), is provided with at least one pair of sliding elements (9), sliding within the rails (8, 8').

6. A foldable storage arrangement (1) according to any one of preceding claims, wherein said fixation element (5) comprises a tab (5a), placed at the back corner of a side wall (2), in the continuity of its bottom edge (2d).

7. A foldable storage arrangement (1) according to any one of preceding claims wherein said fixation element (5) further comprises a tab (5c), placed at the front corner of the side wall (2), in the continuity of its front edge (2d, 2e).

8. A foldable storage arrangement (1) according to any one of the preceding claims, wherein the front wall (3, 3b) of the storage modules (A, B, C) is made in fabric, supple polymer, or supple plastic.

9. A foldable storage arrangement (1) according to any one of the preceding claims, wherein the front wall (3, 3b) of the storage modules (A, B, C), is further provided with a fastening mean (15).

10. A foldable storage arrangement (1) according to any one of the preceding claims, wherein one or more of the storage modules (A, B, C), may be compacted by joining two adjacent side walls (2).

11. A kit (K) comprising at least a number of side walls (2) and front walls (3, 3a), corresponding to one, two, three or more storage modules (A, B, C), as described in any one of the preceding claims.

12. A vehicle (V) comprising a support (S) and a foldable storage arrangement (1) as described in any one of the claims 1 to 11.

13. A vehicle (V) according to claim 12, wherein the support (S) comprises two parallel beams (W) each provided with at least a longitudinal groove (G1), and wherein the fixation elements (5) comprises a tab (5a, 5c) designed to slide within the grooves (G1) of the beams (W).

14. A vehicle (V) according to claims 12 or 13, wherein the support (S) comprises two parallel beams (W), and wherein the fixation elements (5) comprise a clip or a hook (5c), which is able to clamp one or more of the beams (W).

15. A vehicle (V) according to claims 12 to 14, wherein the support (S) comprises two parallel beams (W) at least one of which is provided with several holes (H), and wherein the fixation elements (5) are rigid pins (5b) that can be inserted within the holes (H).

## Patentansprüche

1. Zusammenfaltbare Aufbewahrungsanordnung (1), die mindestens ein erstes Aufbewahrungsmodul (A) umfasst, wobei das Aufbewahrungsmodul (A) zwei Seitenwände (2) und eine Vorderwand (3, 3b) umfasst, wobei jede Seitenwand (2) mit mindestens einem Befestigungsmittel (7) versehen ist, um die Vorderwand (3, 3b) an den Seitenwänden (2) zu halten, und dass jede Seitenwand (2) weiter mindestens ein Fixierungselement (5) umfasst, um die Seitenwand (2) an einem Träger (S) zu fixieren, und wobei die Seitenwände (2) eine gerade Hinterkante (2a), eine zur Hinterkante (2a) orthogonale gerade Unterkante (2b), eine Oberkante (2c), an der eine obere Wand (3a) befestigt ist, und eine Vorderkante (2d) umfassen, an der eine Vorderwand (3b) befestigt ist, **dadurch gekennzeichnet, dass** die Oberkante (2c) der Seitenwände (2) eine konkave Form aufweist, und wobei die Vorderkante (2d) der Seitenwand (2) eine konvexe Form aufweist.

2. Zusammenfaltbare Aufbewahrungsanordnung (1) nach Anspruch 1, wobei mindestens eine der zwei Seitenwände (2) mit einem zweiten Befestigungsmittel (7') versehen ist, das die Vorderwand (3, 3b) eines zweiten Aufbewahrungsmoduls (B), das an das erste Aufbewahrungsmodul (A) angrenzt, halten kann.

3. Zusammenfaltbare Aufbewahrungsanordnung (1) nach Anspruch 1 oder 2, wobei die Seitenwände (2) eine gerade Hinterkante (2a), eine zur Hinterkante (2a) orthogonale gerade Unterkante (2b), und eine halbkreisförmige Vorderkante (2e) umfassen, die die Hinterkante (2a) und die Unterkante (2d) miteinander verbindet und an der die Vorderwand (3) befestigt ist.

4. Zusammenfaltbare Aufbewahrungsanordnung (1) nach einem der vorstehenden Ansprüche, wobei die Befestigungsmittel (7, 7') eine an einer oder mehreren der Seitenwände (2) fixierte Schiene (8, 8') umfassen, in der eine Vorderwand (3, 3b) von einer geöffneten Stellung zu einer geschlossenen Stellung gleiten kann.

5. Zusammenfaltbare Aufbewahrungsanordnung (1) nach Anspruch 5, wobei die Vorderwand (3, 3b) der Aufbewahrungsmodule (A, B, C) mit mindestens einem Paar Gleitelemente (9) versehen ist, die in den Schienen (8, 8') gleiten.

6. Zusammenfaltbare Aufbewahrungsanordnung (1) nach einem der vorstehenden Ansprüche, wobei das Fixierungselement (5) eine Lasche (5a) umfasst, die an der hinteren Ecke einer Seitenwand (2) in der Fortsetzung ihrer Unterkante (2d) platziert ist.

7. Zusammenfaltbare Aufbewahrungsanordnung (1) nach einem der vorstehenden Ansprüche, wobei das Fixierungselement (5) weiter eine Lasche (5c) umfasst, die an der vorderen Ecke der Seitenwand (2) in der Fortsetzung ihrer Vorderkante (2d, 2e) platziert ist.

8. Zusammenfaltbare Aufbewahrungsanordnung (1) nach einem der vorstehenden Ansprüche, wobei die Vorderwand (3, 3b) der Aufbewahrungsmodule (A, B, C) aus Gewebe, weichem Polymer oder weichem Kunststoff gefertigt ist.

9. Zusammenfaltbare Aufbewahrungsanordnung (1) nach einem der vorstehenden Ansprüche, wobei die Vorderwand (3, 3b) der Aufbewahrungsmodule (A, B, C) weiter mit einem Befestigungsmittel (15) versehen ist.

10. Zusammenfaltbare Aufbewahrungsanordnung (1) nach einem der vorstehenden Ansprüche, wobei eines oder mehrere der Aufbewahrungsmodule (A, B, C) durch Verbinden von zwei aneinandergrenzenden Seitenwänden (2) miteinander komprimiert werden können.

11. Bausatz (K), der mindestens eine Anzahl von Seitenwänden (2) und Vorderwänden (3, 3a) umfasst, die einem, zwei, drei oder mehr Aufbewahrungsmodulen (A, B, C), wie in einem der vorstehenden Ansprüche beschrieben, entsprechen.

12. Fahrzeug (V), das einen Träger (S) und eine zusammenfaltbare Aufbewahrungsanordnung (1), wie in einem der Ansprüche 1 bis 11 beschrieben, umfasst.

13. Fahrzeug (V) nach Anspruch 12, wobei der Träger (S) zwei parallele Balken (W) umfasst, die jeder mit mindestens einer Längsnut (G1) versehen sind, und wobei die Fixierungselemente (5) eine Lasche (5a, 5c) umfasst, die dazu konzipiert ist, in den Nuten (G1) der Balken (W) zu gleiten.

14. Fahrzeug (V) nach den Ansprüchen 12 oder 13, wobei der Träger (S) zwei parallele Balken (W) umfasst, und wobei die Fixierungselemente (5) eine Klammer oder einen Haken (5c) umfassen, der einen oder mehrere der Balken (W) festklemmen kann.

15. Fahrzeug (V) nach den Ansprüchen 12 bis 14, wobei der Träger (S) zwei parallele Balken (W) umfasst, von denen mindestens einer mit mehreren Löchern (H) versehen ist, und wobei die Fixierungselemente (5) starre Stifte (5b) sind, die in die Löcher (H) eingeführt werden können.

## Revendications

1. Agencement de stockage pliable (1), comprenant au moins un premier module de stockage (A), dans lequel ledit module de stockage (A) comprend deux parois latérales (2) et une paroi avant (3, 3b), où chaque paroi latérale (2) est pourvue d'au moins un moyen d'attache (7) pour maintenir la paroi avant (3, 3b) sur lesdites parois latérales (2), et où chaque paroi latérale (2) comprend en outre au moins un élément de fixation (5) pour fixer ladite paroi latérale (2) sur un support (S) et où lesdites parois latérales (2) comprennent un bord arrière droit (2a), un bord inférieur droit (2b) orthogonal au bord arrière (2a), un bord supérieur (2c), sur lequel est attachée une paroi supérieure (3a) et un bord avant (2d), sur lequel est attachée une paroi avant (3b), **caractérisé en ce que** le bord supérieur (2c) des parois latérales (2) a une forme concave, et où le bord avant (2d) de la paroi latérale (2) a une forme convexe.

2. Agencement de stockage pliable (1) selon la revendication 1, dans lequel au moins l'une des deux parois latérales (2), est pourvue d'un deuxième moyen de d'attache (7'), capable de maintenir la paroi avant (3, 3b) d'un deuxième module de stockage (B), adjacente au premier module de stockage (A).

3. Agencement de stockage pliable (1) selon la revendication 1 ou 2, dans lequel lesdites parois latérales (2) comprennent un bord arrière droit (2a), un bord inférieur droit (2b) orthogonal au bord arrière (2a) et un bord avant semi-circulaire (2e) reliant le bord arrière (2a) et le bord inférieur (2d), et sur lequel est attachée la paroi avant (3).

4. Agencement de stockage pliable (1) selon l'une quelconque des revendications précédentes, dans lequel lesdits moyens d'attache (7, 7') comprennent un rail (8, 8') fixé sur une ou plusieurs des parois latérales (2), où une paroi avant (3, 3b) peut coulisser d'une position ouverte à une position fermée.

5. Agencement de stockage pliable (1) selon la revendication 5, dans lequel la paroi avant (3, 3b) des modules de stockage (A, B, C) est pourvue d'au moins une paire d'éléments coulissants (9), coulissant dans les rails (8, 8').

6. Agencement de stockage pliable (1) selon l'une quelconque des revendications précédentes, dans lequel ledit élément de fixation (5) comprend une languette (5a), placée au coin arrière d'une paroi latérale (2), dans la continuité de son bord inférieur (2d).

7. Agencement de stockage pliable (1) selon l'une quelconque des revendications précédentes, dans lequel ledit élément de fixation (5) comprend en outre une languette (5c), placée au coin avant de la paroi latérale (2), dans la continuité de son bord avant (2d, 2e).

8. Agencement de stockage pliable (1) selon l'une quelconque des revendications précédentes, dans lequel la paroi avant (3, 3b) des modules de stockage (A, B, C) est réalisée en tissu, polymère souple ou plastique souple.

9. Agencement de stockage pliable (1) selon l'une quelconque des revendications précédentes, dans lequel la paroi avant (3, 3b) des modules de stockage (A, B, C), est en outre pourvue d'un moyen d'attache (15).

10. Agencement de stockage pliable (1) selon l'une quelconque des revendications précédentes, dans lequel un ou plusieurs des modules de stockage (A, B, C) peut/peuvent être compacté(s) en reliant deux parois latérales (2) adjacentes.

11. Kit (K) comprenant au moins un certain nombre de parois latérales (2) et de parois avant (3, 3a), correspondant à un, deux, trois module(s) de stockage (A, B, C) ou plus, comme décrit dans l'une quelconque des revendications précédentes.

12. Véhicule (V) comprenant un support (S) et un agencement de stockage pliable (1) tel que décrit dans l'une quelconque des revendications 1 à 11.

13. Véhicule (V) selon la revendication 12, dans lequel le support (S) comprend deux poutres parallèles (W) pourvues chacune d'au moins une rainure longitudinale (G1), et dans lequel les éléments de fixation (5) comprennent une languette (5a, 5c) conçue pour coulisser dans les rainures (G1) des poutres (W).

14. Véhicule (V) selon la revendication 12 ou 13, dans lequel le support (S) comprend deux poutres parallèles (W), et dans lequel les éléments de fixation (5) comprennent une attache ou un crochet (5c), qui est capable de serrer une ou plusieurs des poutres (W).

15. Véhicule (V) selon les revendications 12 à 14, dans lequel le support (S) comprend deux poutres parallèles (W) dont au moins une est pourvue de plusieurs trous (H), et dans lequel les éléments de fixation (5) sont des broches rigides (5b) qui peuvent être insérées dans les trous (H).
